# EUROPEAN PATENT APPLICATION

(11) **EP 4 596 929 A1**
(43) Date of publication of application: **06.08.2025**
(21) Application number: 24155355.1
(22) Date of filing: 01.02.2024
(51) Int. Cl.: F16K 1/42, F25B 41/31

(54) **VALVE FOR A COOLING SYSTEM**

(71) Applicant: Siemens Schweiz AG, 8047 Zürich (CH)
(72) Inventor: Ernstberger, Pascal, 76437 Rastatt (DE); Krawiec, Grzegorz, 63-500 Ostrzesow (PL); Sauerer, Daniel, 76479 Steinmauern (DE); Bork, Richard, 6006 Luzern (CH)
(74) Representative: Siemens Patent Attorneys

(57) **Abstract**

Valve for a cooling system. A valve (1) comprising: a first port (3), a second port (4), and a fluid path extending between the first port (3) and the second port (4); a valve member (5) situated in the fluid path between the first port (3) and the second port (4), the valve member (5) being movable between a closed position, which closes the fluid path between the first port (3) and the second port (4), and an open position, which opens the fluid path between the first port (3) and the second port (4); a valve seat assembly (6) situated in the fluid path between the first port (3) and the second port (4), the assembly (6) comprising: a gasket, a frame, an adaptor; wherein the gasket is interposed between the adaptor and a portion of the frame.

## Description

### Background

The present disclosure relates to a valve for a cooling system. The cooling system comprises the valve for controlling a flow of a medium passing through a pipe part of a pipe system. The medium is distributed via the pipe system to a plurality of consumer devices and/or thermal energy exchangers. The cooling system can comprise a common source and the pipe system can connect to the common source.

In commercial and/or industrial and/or residential buildings, several applications are known which make use of a pipe system. The pipe system distributes a medium to various consumer devices spread over the building. The medium typically originates from a common source.

A pipe system may be or comprise a closed circuit. The closed circuit comprises one or more supply pipes connecting the common source with each of the consumer devices. The closed circuit also comprises one or more return pipes connecting each of the consumer devices back to the common source.

The consumer devices preferably comprise thermal energy exchangers. The consumer devices ideally are thermal energy exchangers. More specifically, the consumer devices can comprise cold exchange systems. The consumer devices can even be cold exchange systems.

The pipe system may also be or comprise an open circuit. The open circuit comprises one or more supply pipes connecting the common source with each of the consumer devices. In contrast to closed circuits, there is no return pipe that connects every consumer device back to the common source.

A pipe system can still be a combination of a closed circuit and an open circuit.

These systems can include valves such as control valves having adjustable orifice systems for controlling the flow of a medium to the respective consumer device. A position of an adjustable orifice of the adjustable orifice system determines the amount of medium passing through the consumer device per time unit. In cold exchange applications, this means that the position of the orifice determines an amount of cooling delivered from the thermal energy exchanger to an adjacent structure. The adjacent structure preferably comprises an adjacent room of a building. The adjacent space ideally is an adjacent room of a building. The adjacent structure can also comprise an adjacent appliance or a space thereof. The adjacent structure can still be an adjacent appliance or a space thereof.

The flow rate of a medium passing through the consumer device depends, among other factors, on the adjustable orifice. The adjustable orifice of a valve such as an expansion valve comprises a valve seat and a valve element such as a plunger. Known adjustable orifices comprise ball-type adjustable orifices and orifices of globe valves.

An adjustable orifice of a valve functions to enable flow through the valve when the adjustable orifice is in an open position. An adjustable orifice of a valve functions to obturate flow through the valve when the adjustable orifice is in a closed position. In certain applications, the adjustable orifice is expected to close tightly when the adjustable orifice is in the closed position. In other words, in the closed position of the adjustable orifice there will be zero flow through the valve.

An adjustable orifice of a valve of a cooling system is a mechanical part and as such is prone to mechanical wear. The parts of the adjustable orifice such as the valve element and the valve seat are expected to not leak even after many valve cycles. Those parts of the adjustable orifice are also expected to not leak after several years in service.

A patent US6435207B1 issued on 20 August 2022. US6435207B1 deals with a flow regulation fitting. The patent US6435207B1 claims a priority date of 21 December 1996.

A control system for pipe systems is known from US6435207B1. The patent US6435207B1 describes a flow regulation control valve for setting and measuring volume flow in pipes. The flow regulation control valve comprises a shut-off member arranged in a flow chamber, for setting a desired flow state.

A sensor is arranged in or adjacent the flow chamber, for sensing a value representative of a flow through the flow chamber.

The flow regulation control valve further comprises an evaluation unit. The evaluation unit determines the flow from the signal recorded by the sensor and from the characteristic values of the control valve. Those characteristic values are stored in an electronic data store at the sensor and are valve specific. A flow rate through a section of the pipe system is manually adjusted using the shut-off member of the flow regulation control valve. The flow rate is adjusted until the desired flow is displayed by the evaluation unit.

A patent application WO98/25086A1 was filed on 4 December 1997. The application was published on 11 June 1998. A priority date of 4 December 1996 is claimed. WO98/25086A1 discloses a modulating fluid control device for a fluid-based heating and cooling system for a measured environment.

The control device comprises a body, a supply port and a return port and a valve located between these ports. The valve connects to an actuator. The actuator and the valve are responsive to input from a sensor and from a controller. A flow of a medium through the valve is thereby restricted, the restriction depending on conditions in the measured environment. The control device is provided with a valve controller and an actuator to position the valve and thereby regulate flow through that valve. A flow sensor is associated with the valve and records the flow of the medium at a location in the system. The flow sensor provides a signal indicative of that flow rate to the valve controller. The flow sensor and the valve controller maintain a required flow rate through the system as recorded by the sensor. The system thereby promotes desired environmental conditions in a space.

A European patent application EP3839308A1 was filed by SIEMENS SCHWEIZ AG on 20 December 2019. The application was published on 23 June 2021. EP3839308A1 deals with an expansion valve. The valve comprises an inlet port, an outlet port, and an adjustable orifice situated in a fluid path between the inlet port and the outlet port. The adjustable orifice system corresponds to a globe valve and comprises the adjustable orifice and an armature. An electric current through a solenoid causes movement of the armature and of the adjustable orifice. The solenoid is directly immersed in a refrigerant.

A patent US5419365A was granted on 30 May 1995 and deals with a pressure regulator for water blasting. US5419365A discloses a valve having a replaceable cartridge. An adaptor fitting secures the replaceable cartridge to the body of the valve. The cartridge also provides a diffusor on its outer end. A plunger of the valve engages a valve element of the replaceable cartridge.

The present disclosure deals with a valve for a cooling system wherein the adjustable orifice of the valve is improved. The valve can, by way of example, be an expansion valve in the cooling system.

### Summary

The adjustable orifice of the valve of the present disclosure comprises a valve member in the form of a plunger. The adjustable orifice also comprises a valve seat assembly having a valve seat in the form of a gasket. The plunger cooperates with the gasket to close and to open the valve. More specifically, the plunger in the closed position abuts the gasket. In the open position, the plunger is detached from the gasket.

The tip end of the plunger has the shape of a receptacle with a head portion pointing toward the gasket. An edge is provided at end of the head. In the closed position, the edge abuts the gasket thereby closing the valve. The shape of the plunger enables well-defined closing and opening characteristics.

The plunger and the gasket can be made of materials that ensure longevity. For example, the plunger can be made of a metal such as (stainless) steel whereas the gasket is made of a polymeric material. The material of the gasket is generally more ductile than the material of the (circular edge of the) plunger.

To arrive at a more versatile solution, an adaptor such as a flow control adaptor is employed. The adaptor is part of the valve seat assembly. That is, different adaptors can be used in a valve that remains otherwise unchanged.

While the valve member and/or the plunger are moving parts, the gasket is not configured to move during operation of the valve.

Like the gasket, the adaptor provides an aperture and/or a bore for enabling a flow of a fluid between the ports of the valve. The fluid can be a refrigerant fluid. It can be liquid and/or gaseous. The fluid can also be superheated.

The adaptor provides an inner surface surrounding the aperture and/or the bore of the adaptor. In operation, the plunger linearly moves along the inner surface of the adaptor thereby opening and/or restricting the flow of the fluid. More specifically, an outer surface of the plunger moves along the inner surface of the flow control adaptor to adjust the flow of the fluid.

One or more depressions can be situated along the inner surface of the flow control adaptor. The one or more depressions increase fluid flow when the valve is in the open position. To that end, the fluid flows sideways along the tip end of the plunger and into a first end of the one or more depressions.

The fluid will then flow through the one or more depressions toward a second end of the one or more depressions. The second end is different from the first end. The second end points toward the gasket while the first end points toward a linear actuator of the valve.

When the fluid exits the one or more depressions it will flow toward the gasket and then toward a second port of the valve.

The valve can be used in more than one direction. The fluid can flow from a second port of the valve toward the gasket and then toward the flow control adaptor. That is, the fluid enters the one or more depressions at the second ends of the one or more depressions. The fluid will flow through the one or more depressions and will exit the one or more depressions at their first ends. Eventually, the fluid will flow toward the linear actuator and toward a first port of the valve.

Various symmetric and unsymmetric arrangements of the one or more depressions of the adaptor can be chosen to adapt the valve. The valve can thus be adapted in accordance with the nuances of its application in a refrigerant circuit. The valve can, by way of non-limiting example, be used as an expansion valve in a refrigerant circuit.

### Brief description of the drawings

Various features will become apparent to those skilled in the art from the following detailed description of the disclosed non-limiting embodiments. The drawings that accompany the detailed description can be briefly described as follows:
FIG 1 is a schematic of a valve such as a valve for a cooling circuit.
FIG 2 depicts details of the valve seat assembly of the valve shown in FIG 1.
FIG 3 shows a top view of a flow control adaptor.
FIG 4 illustrates a cross section of the same flow control adaptor.
FIG 5 illustrates another cross section of the same flow control adaptor.
FIG 6 shows a top view of another flow control adaptor, the other flow control adaptor being different from the flow control adaptor of FIG 3.
FIG 7 shows a top view of yet another flow control adaptor, wherein depressions and/or cutouts and/or slots are unevenly distributed.

### Detailed description

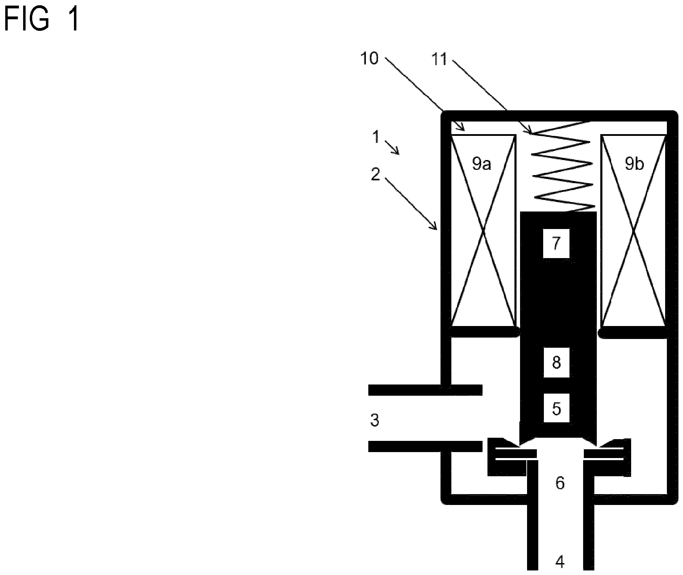

FIG 1 shows the various components of a valve 1 of the instant disclosure. The valve 1 advantageously is or comprises an expansion valve. Yet more advantageously the valve 1 is or comprises an electronic expansion valve. The valve 1 can be installed in a refrigeration-vapour circuit. The valve 1 in accordance with at least one embodiment is advantageously part of a refrigeration-vapour circuit.

The valve 1 comprises a housing 2. The valve housing 2 has sides defining a first port 3 and a second port 4. In an embodiment, the first port 3 comprises a first conduit. It is also envisaged that the second port 4 comprises a second conduit. According to an aspect of the instant disclosure, the first port 3 is an inlet port and the second port 4 is an outlet port. According to another aspect of the instant disclosure, the first port 3 is an outlet port and the second port 4 is an inlet port.

It is envisaged that a valve body is or comprises the housing 2. In an embodiment, the housing 2 comprises a metallic material such as steel, especially austenitic (stainless) steel and/or ferrite steel. In an alternate embodiment, the housing 2 comprises aluminum (alloy) or gunmetal or brass. In yet another alternate embodiment, the housing 2 comprises a polymeric material. According to an aspect, the housing 2 is manufactured using an additive manufacturing technique such as three-dimensional printing. Manufacture of the housing 2 can, in a specific embodiment, involve selective laser sintering. It is still envisaged that the housing 2 comprises a grey cast material.

The first port 3 and the second port 4 are in fluid communication with each other to afford flow of a fluid through the valve 1. In a preferred embodiment, the fluid comprises a refrigerant. The fluid may, by way of non-limiting example, be a R32, R134a, R290, R410A, R450A, R452A, R513A, R454C, R1234yf, or a R1234ze(E) refrigerant. The fluid at the inlet port advantageously is a liquid and/or a gaseous fluid. The fluid at the outlet port preferably is a two-phase fluid.

A fluid path extends between the first port 3 and the second port 4. A plunger 5 is situated in the fluid path. The plunger 5 is linearly movable. The plunger 5 can also be axially movable. The plunger 5 cooperates with a valve seat assembly 6. The plunger 5 thereby varies and limits a flow rate of the fluid through the valve 1.

The plunger 5 comprises a head portion. The head portion protrudes from the plunger 5. Ideally, the head portion protrudes from the plunger 5 in the direction of the valve seat assembly 6. According to an aspect, the plunger 5 comprises a body portion. The head portion protrudes from the body portion of the plunger 5. Ideally, the head portion protrudes from the body portion of the plunger 5 in the direction of the valve seat assembly 6. The head portion of the plunger 5 and the body portion of the plunger 5 can be unitary.

According to an aspect, the plunger 5 comprises a receptacle portion. The head portion protrudes from the receptacle portion of the plunger 5. Ideally, the head portion protrudes from the receptacle portion of the plunger 5 in the direction of the valve seat assembly 6. The receptacle portion of the plunger 5 and the body portion of the plunger 5 can be unitary.

The plunger 5 comprises an end pointing toward the valve seat assembly 6. The end of the plunger 5 can have the shape of a receptacle and/or of an inverted bowl. The shape of the end of the plunger 5 can be such that the opening of the receptacle points toward the valve seat assembly 6.

Advantageously, the head portion comprises the end pointing toward the valve seat assembly 6. Ideally, the head portion is the end pointing toward the valve seat assembly 6. The end of the plunger 5 and/or of the head portion can comprise a circular edge pointing toward the valve seat assembly 6. The edge can be a sharp edge with an acute angle. That is, the edge tapers toward the valve seat assembly 6 and that tapering defines an acute angle. The acute angle can, by way of example, be less than twenty degrees or less than ten degrees or even less than five degrees.

The edge at the end of the plunger 5 preferably is or comprises a rim. The edge at the end of the plunger 5 follows a closed continuous line. The edge at the end of the plunger 5 can also follows a closed continuous and circular.

FIG 1 shows the valve seat assembly 6 as part of the second port 4. A skilled person having reviewed the embodiments disclosed herein understands that the first port 3 can also comprise the valve seat assembly 6. The skilled person also understands that the assembly 6 can be separate from the first port 3 and can be separate from the second port 4.

In the embodiment shown in FIG 1, the plunger 5 is linearly movable by linear movement of the armature 7. An axial direction is defined by the linear movement of the plunger 5. That is, the plunger 5 is axially movable by axial movement of the armature 7. The armature 7 can mechanically connect to the plunger 5 via a stem 8. It is also envisaged that the armature 7 directly connects to the plunger 5. It is still envisaged that the armature 7 and the plunger 5 are unitary.

According to an aspect of the present disclosure, the armature 7, the stem 8, and the plunger 5 are unitary. That is, the stem 8 and the plunger 5 are both integral parts of the armature 7. Likewise, the armature 7 and the stem 8 are integral with the plunger 5.

According to another aspect of the present disclosure, the plunger 5 is configured to rotate by some extent with respect to the armature 7. The plunger 5 preferably rotates about an axis connecting the armature 7, the plunger 5, and/or the stem 8. In an embodiment, the plunger 5 is allowed to rotate by an articulation angle of 0.1 degrees or of 0.2 degrees or even of 0.5 degrees. A limited amount of articulation of the plunger 5 with respect to the armature 7 improves on the alignment of the arrangement.

At least a portion of the armature 7 may be surrounded by a solenoid 9a, 9b. Upon application of an electric current, the solenoid 9a, 9b produces a magnetic flux. This magnetic flux acts on the armature 7 thereby displacing the armature 7.

FIG 1 shows a valve 1 having a solenoid actuator. It is envisaged that other actuators such as hydraulic or pneumatic actuators can be used to actuate the stem 8 and the plunger 5. The valve 1 may also be actuated by a magnetic piston pump. This list of actuators is not exhaustive.

A tubular portion such as a can needs not envelope the armature 7 and/or the stem 8. That is, the armature 7 has an outer surface. In an embodiment, a portion of the outer surface of the armature 7 directly faces the solenoid 9a, 9b. In another embodiment, the outer surface of the armature 7 directly faces the solenoid 9a, 9b. Likewise, the solenoid 9a, 9b has an outer surface. In an embodiment, a portion of the outer surface of the solenoid 9a, 9b directly faces the armature 7. In another embodiment, the outer surface of the solenoid 9a, 9b directly faces the armature 7.

The solenoid 9a, 9b and the armature 7 are arranged in the same chamber 10 inside the housing 2. The chamber 10 is ideally filled with a liquid and/or with a gaseous fluid. The liquid and/or gaseous fluid inside the chamber 10 can, by way of non-limiting example, be a R32, R134a, R290, R410A, R450A, R452A, R513A, R454C, R1234yf, or a R1234ze(E) refrigerant.

This liquid and/or gaseous fluid is in direct contact with the outer surface of the portion of the armature 7 that is inside the chamber 10. The liquid and/or gaseous fluid also is in direct contact with the solenoid 9a, 9b.

According to an aspect of the instant disclosure, the solenoid 9a, 9b comprises a plurality of coils. It is envisaged that at least one coil or at least two coils or at least five coils of the solenoid 9a, 9b are directly exposed to the liquid and/or to the gaseous fluid in the chamber 10a. In a specific embodiment, all the coils of the solenoid 9a, 9b are directly exposed to the liquid and/or to the gaseous fluid. The solenoid 9a, 9b preferably comprises a helical solenoid.

A resilient member 11 ensures that the valve 1 is a normally closed valve. The resilient member 11 couples to the armature 7. In a specific embodiment, the resilient member 11 mechanically connects to the armature 7.

The resilient member 11 urges the armature 7 and the plunger 5 to close the valve 1. To that end, the resilient member 11 urges the armature 7 and the plunger 5 toward the seat assembly 6. In a specific embodiment, the resilient member 11 urges the armature 7, the stem 8, and the plunger 5 to close the valve 1. To that end, the resilient member 11 urges the armature 7, the stem 8, and the plunger 5 toward the seat assembly 6. The member 11 preferably urges these movable members 7, 8, 5 toward the assembly 6 until the plunger 5 engages a cooperating member of the assembly 6. The plunger 5 advantageously engages the cooperating member of the assembly 6 in the closed position of the valve 1.

According to an aspect, the resilient member 11 comprises a compression spring. In one embodiment, the resilient member 11 comprises a helical compression spring.

FIG 1 shows a resilient member 11 in the form of a spring. It is envisaged that other resilient members such as ferromagnetic members urge the armature 7 and the plunger 5 to close the valve 1. It is envisaged that resilient members such as ferromagnetic members urge the armature 7, the stem 8, and the plunger 5 to close the valve 1. This list of resilient members is not exhaustive.

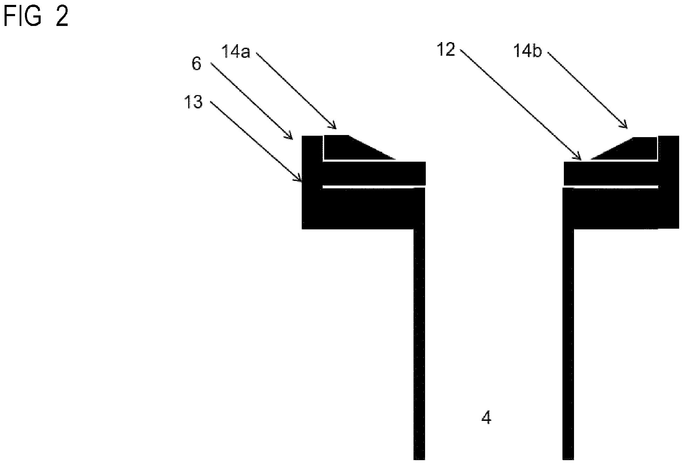

Now turning to FIG 2, details of the valve seat assembly 6 of the valve 1 are shown. The valve seat assembly 6 comprises a gasket 12 such as an annular seal. The gasket 12 can be made of an elastic material such as a polymeric material and/or a rubber material. The gasket 12 can, by way of non-limiting examples, be made of a polymeric material comprising at least one of:
- polytetrafluoroethylene,
- polyether ether ketone.

The polymeric material comprising polytetrafluoroethylene can also comprise graphite particles such as nodular graphite.

The gasket 12 can, by way of other non-limiting examples, be made of a polymeric material selected from:
- polytetrafluoroethylene or
- polyether ether ketone.

The gasket 12 provides an aperture to enable a flow of a fluid toward or from the first port 3. Likewise, the gasket 12 provides an aperture to enable a flow of a fluid toward or from the second port 4.

The aperture and/or the orifice of the gasket 12 is such that the plunger 5 cannot move into and out of the aperture and/or orifice of the gasket 12. In other words, the gasket 12 will eventually stop or inhibit movements of the plunger 5. That is, an inner diameter of the aperture and/or of the orifice of the gasket 12 is less than an outer diameter of the plunger 5. More specifically, the inner diameter of the aperture and/or of the orifice can be less than the outer diameter of the edge of the plunger 5. The inner diameter of the aperture and/or of the orifice can also be less than the outer diameter of the rim of the plunger 5. The inner diameter of the aperture and/or of the orifice can still be less than the outer diameter of the head portion of the plunger 5.

In an embodiment, the gasket 12 has cylindrical symmetry. It is also envisaged that the second port 4 has cylindrical symmetry. Ideally, the gasket 12 and the second port 4 both have cylindrical symmetry. The gasket 12 and the second port 4 can even exhibit cylindrical symmetry with respect to the same axis or with respect to substantially the same axis. This axis is advantageously defined by the linear movement of the plunger 5. This axis can also be defined by the axial movement of the plunger 5.

In a special embodiment, the gasket 12 and the aperture of the gasket 12 both have cylindrical symmetry. The gasket 12 and the aperture of the gasket 12 can even exhibit cylindrical symmetry with respect to the same axis or to substantially the same axis. This axis is advantageously defined by the linear movement of the plunger 5. This axis can also be defined by the axial movement of the plunger 5.

The gasket 12 can be mechanically mounted to a frame 13. The frame 13 then mechanically connects gasket 12 to the second port 4. It is envisaged that the frame 13 and the gasket 12 provide parallel surfaces. These parallel surfaces are perpendicular to a direction of flow through the second port 4 and/or to a symmetry axis of the second port 4. These parallel surfaces are also each perpendicular to an axial direction defined by the (movement of the) plunger 5. It is envisaged that the parallel surface of the gasket 12 abuts the parallel surface of the frame 13. That is, the gasket 12 sits on the frame 13.

In an embodiment, the frame 13 comprises a metallic material such as steel. The steel material can, by way of non-limiting example, be selected from
- austenite steel,
- ferrite steel,
- stainless steel.

In an alternate embodiment, the frame 13 comprises aluminum (alloy) or gunmetal or brass. In yet another alternate embodiment, the frame 13 comprises a polymeric material. According to an aspect, the frame 13 is manufactured using an additive manufacturing technique such as three-dimensional printing. Manufacture of the frame 13 can, in a specific embodiment, involve selective laser sintering. It is still envisaged that the frame 13 comprises a grey cast material.

According to an aspect of the present disclosure, the housing 2 and the frame 13 are made of the same materials.

The valve seat assembly 6 also comprises a flow control adaptor 14a, 14b. The flow control adaptor 14a, 14b is arranged such that the gasket 12 is arranged in between the flow control adaptor 14a, 14b and the valve port 4. In an embodiment, the gasket 12 is arranged in between the flow control adaptor 14a, 14b and the aforementioned parallel surface of the frame 13.

The flow control adaptor 14a, 14b can be mechanically mounted to a frame 13. The frame 13 thus mechanically connects the flow control adaptor 14a, 14b to the second port 4. It is envisaged that the flow control adaptor 14a, 14b and the gasket 12 provide parallel surfaces. These parallel surfaces are perpendicular to a direction of flow through the second port 4 and/or to a symmetry axis of the second port 4. These parallel surfaces are also each perpendicular to an axial direction defined by the (movement of the) plunger 5. It is envisaged that the parallel surface of the gasket 12 abuts the parallel surface of the flow control adaptor 14a, 14b.

That is, the gasket 12 has a first surface and a second surface, the second surface being different from the first surface. The second surface and the first surface of the gasket 12 are parallel. The first surface of the gasket 12 and the second surface of the gasket 12 are disposed on opposite sides of the gasket 12. The first surface of the gasket 12 abuts the frame 13. The second surface of the gasket 12 abuts the flow control adaptor 14a, 14b. The gasket 12 is advantageously squeezed in between the (a portion of the) frame 13 and the flow control adaptor 14a, 14b. In the closed position, the second surface of the gasket 12 also abuts the plunger 5 and/or the head portion of the plunger 5.

In operation, the gasket 12 can cooperate with the plunger 5 to close or open the valve 1. More specifically, the gasket 12 cooperates with a cooperating portion of the plunger 5. The cooperating portion of the plunger 5 can be selected from at least one of:
- the edge of the plunger 5,
- the rim of the plunger 5,
- the head portion of the plunger 5.

The gasket 12 can be made of a material that is more ductile than the material of the cooperating portion of the plunger 5. The material of the gasket 12 at temperatures below 433 Kelvins is more ductile than the material of the aforementioned cooperating portion. The material of the gasket 12 is also more ductile than the material of the cooperating portion at temperatures above 213 Kelvins. In other words, the gasket 12 may be deformed while the valve 1 is in service.

In a special embodiment, the flow control adaptor 14a, 14b comprises aluminum (alloy) or gunmetal or brass. In yet another special embodiment, the flow control adaptor 14a, 14b comprises a polymeric material. The material of the flow control adaptor 14a, 14b can, by way of non-limiting example, also be selected from:
- austenite steel,
- ferrite steel,
- stainless steel.

The flow control adaptor 14a, 14b provides an aperture and/or an orifice to enable a flow of a fluid toward or from the first port 3. Likewise, the flow control adaptor 14a, 14b provides an aperture and/or an orifice to enable a flow of a fluid toward or from the second port 4. The aperture and/or the orifice of the adaptor 14a, 14b affords linear movement of the plunger 5 into and out of the aperture and/or the orifice. The aperture and/or the orifice of the adaptor 14a, 14b also affords axial movement of the plunger 5 into and out of the aperture and/or the orifice. That is, an inner diameter of the aperture and/or of the orifice of the adaptor 14a, 14b is larger than an outer diameter of the plunger 5. More specifically, the inner diameter of the aperture and/or of the orifice can be larger than the outer diameter of the edge of the plunger 5. The inner diameter of the aperture and/or of the orifice can also be larger than the outer diameter of the rim of the plunger 5. The inner diameter of the aperture and/or of the orifice can still be larger than the outer diameter of the head portion of the plunger 5.

In an embodiment, the plunger 5 can linearly move a distance between zero and ten millimeters in the direction of flow. More preferably, the plunger 5 can linearly move a distance between zero and five millimeters in the direction of flow. Yet more preferably, the plunger 5 can linearly move a distance between zero and three millimeters in the direction of flow. Small travel distances of the plunger 5 result in a valve 1 that requires modest resources in terms of actuation.

In a related embodiment, the plunger 5 can axially move a distance between zero and ten millimeters in the direction of flow. More preferably, the plunger 5 can axially move a distance between zero and five millimeters in the direction of flow. Yet more preferably, the plunger 5 can axially move a distance between zero and three millimeters in the direction of flow. Small travel distances of the plunger 5 result in a valve 1 that requires modest resources in terms of actuation.

The flow control adaptor 14a, 14b advantageously forms a part that is different from the frame 13 and is different from the gasket 12. The flow control adaptor 14a, 14b can even be mechanically separable from the frame 13 and from the gasket 12. The separation preferably takes place non-destructively. That is, various flow control adaptors 14a, 14b can be used together with the same frame 13 and together with the same gasket 12. More specifically, various flow control adaptors 14a, 14b can be mounted to and/or fitted to the same frame 13. For example, various flow control adaptors 14a, 14b can be screw-mounted and/or glued and/or shrink-fitted to the frame 13. Various flow control adaptors 14a, 14b can, by way of another non-limiting example, be interference-fitted to the frame 13. Various flow control adaptors 14a, 14b can, by way of still another non-limiting example, be caulked to the frame 13. When various flow control adaptors 14a, 14b can be mounted to the same frame 13, the valve 1 can be configured more easily. A plethora of flow rates through the valve can be accomplished by replacing the flow control adaptor 14a, 14b.

In the embodiment shown in FIG 1 and in FIG 2, the flow control adaptor 14a, 14b is a diffuser and has rotational symmetry. The flow control adaptor 14a, 14b as shown in FIG 1 comprises an inner portion and that inner portion has a bevelled surface. The surface of the inner portion preferably is bevelled and at the same time smooth. It is also envisaged that the cooperating portion of the plunger 5 has rotational symmetry. Ideally, the flow control adaptor 14a, 14b and the cooperating portion of the plunger 5 both have rotational symmetry. It is also envisaged that the rim of the cooperating portion of the plunger 5 has rotational symmetry. Ideally, the flow control adaptor 14a, 14b and the rim of the cooperating portion of the plunger 5 both have rotational symmetry. It is still envisaged that the edge of the cooperating portion of the plunger 5 has rotational symmetry. Ideally, the flow control adaptor 14a, 14b and the edge of the cooperating portion of the plunger 5 both have rotational symmetry. In an embodiment, the head portion of the plunger 5 has rotational symmetry. Ideally, the flow control adaptor 14a, 14b and the head portion of the plunger 5 both have rotational symmetry.

The flow control adaptor 14a, 14b and the cooperating portion of the plunger 5 can even exhibit rotational symmetry about (substantially) the same axis. The flow control adaptor 14a, 14b and the rim of the cooperating portion of the plunger 5 can still exhibit rotational symmetry about (substantially) the same axis. The flow control adaptor 14a, 14b and the edge of the cooperating portion of the plunger 5 can still exhibit rotational symmetry about (substantially) the same axis. In an embodiment, the flow control adaptor 14a, 14b and the head portion of the plunger 5 exhibit rotational symmetry about (substantially) the same axis.

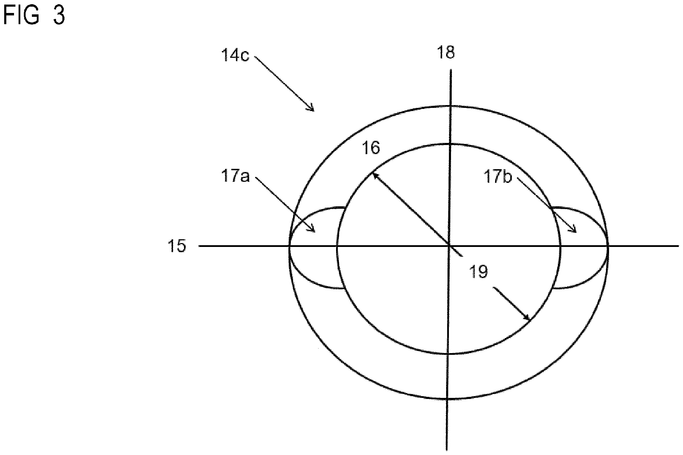

Now turning to FIG 3, a configuration is shown wherein the flow control adaptor 14c no longer has full cylindrical or rotational symmetry. The flow control adaptor 14c as illustrated in FIG 3 is viewed from the top whereas the flow control adaptor 14a, 14b illustrated in FIG 2 is viewed sideways. More specifically, FIG 2 provides a cross-sectional view of the flow control adaptor 14a, 14b.

Instead of having full rotational symmetry, the symmetry of the flow control adaptor 14c shown in FIG 3 is two-fold with respect to a plane 15. That is, flow control adaptor 14c has reflection symmetry with respect to the plane 15. In contrast to the flow control adaptor 14a, 14b depicted in FIG 2, the surface 16 of the flow control adaptor 14c is preferably not slanted. The surface 16 such as the top surface of the flow control adaptor 14c is preferably also not frusto-conical. The top surface of the flow control adaptor 14c points away from the second port 4.

Two depressions 17a, 17b break the full rotational symmetry of the flow control adaptor 14c as shown in FIG 3. In operation, a fluid such as a refrigerant can flow in between a plunger 5 and the adaptor 14c via the depression 17a, 17b. The depressions 17a, 17b thus enable a limited flow between the plunger 5 and the adaptor 14c.

That is, a fluid such as a refrigerant will flow sideways in between the plunger 5 and the depressions 17a, 17b. A flow of the fluid will preferably be enabled laterally between a cylindrical, outer surface of the plunger 5 and the depressions 17a, 17b. The fluid will then continue to flow toward one of the ports 3, 4 of the valve 1. That flow will vary as the plunger 5 linearly moves between the closed position and the open position of the valve 1. That flow will also vary as the plunger 5 axially moves between the closed position and the open position of the valve 1. The flow will be zero when the plunger 5 is in the closed position.

According to an aspect of the present disclosure, the depressions 17a, 17b comprise cutouts. According to an aspect of the present disclosure, the depressions 17a, 17b are cutouts. Advantageously, both depressions 17a, 17b as shown in FIG 3 are cutouts.

According to an aspect of the present disclosure, the depressions 17a, 17b comprise slots. According to an aspect of the present disclosure, the depressions 17a, 17b are slots. Advantageously, both depressions 17a, 17b as shown in FIG 3 are slots.

The depressions 17a, 17b exhibit reflection symmetry with respect to the plane 15. In a special embodiment, the depressions 17a, 17b exhibit reflection symmetry with respect to a plane 18. The plane 18 is advantageously perpendicular to the plane 15.

The flow control adaptor 14c provides an aperture and/or an orifice to enable a flow of a fluid toward or from the first port 3. Likewise, the flow control adaptor 14c provides an aperture and/or an orifice to enable a flow of a fluid toward or from the second port 4. The aperture and/or the orifice of the flow control adaptor 14c affords linear movement of the plunger 5 into and out of the aperture and/or the orifice. The aperture and/or the orifice of the adaptor 14c also affords axial movement of the plunger 5 into and out of the aperture and/or the orifice. That is, an inner diameter 19 of the aperture and/or of the orifice of the adaptor 14c is larger than an outer diameter of the plunger 5. More specifically, the inner diameter 19 of the aperture and/or of the orifice can be larger than the outer diameter of the edge of the plunger 5. The inner diameter 19 of the aperture and/or of the orifice can also be larger than the outer diameter of the rim of the plunger 5.

The choices of materials for the flow control adaptor 14c are the same as for the flow control adaptor 14a, 14b.

Due to its bevelled or inverted frusto-conical surface, the flow control adaptor 14a, 14b of FIG 2 affords a larger flow than the adaptor 14c of FIG 3. The flow control adaptor 14c no longer has a bevelled surface with full rotational symmetry. Instead, depressions 17a, 17b and/or cutouts 17a, 17b and/or slots 17 enable flow. Yet these depressions 17a, 17b and/or cutouts 17a, 17b and/or slots 17 do not afford flow along the entire circumference of the flow control adaptor 14c. Consequently, values of flow through the flow control adaptor 14c tend to be less than values of flow through the flow control adaptor 14a, 14b. The comparison of flow coefficients between these embodiments applies at constant pressure drop and at constant inner diameter of the flow control adaptor 14c.

The flow control adaptor 14c advantageously forms a part that is different from the frame 13 and is different from the gasket 12. The flow control adaptor 14c can even be mechanically separable from the frame 13 and from the gasket 12. The separation preferably takes place non-destructively. That is, various flow control adaptors 14a - 14c can be used together with the same frame 13 and together with the same gasket 12. More specifically, various flow control adaptors 14a - 14c can be mounted to and/or fitted to the same frame 13. For example, various flow control adaptors 14a - 14c can be screw-mounted and/or glued and/or shrink-fitted to the frame 13. When various flow control adaptors 14a - 14c can be mounted to the same frame 13, the valve 1 can be configured more easily. A plethora of flow rates through the valve can be accomplished by replacing the flow control adaptor 14c.

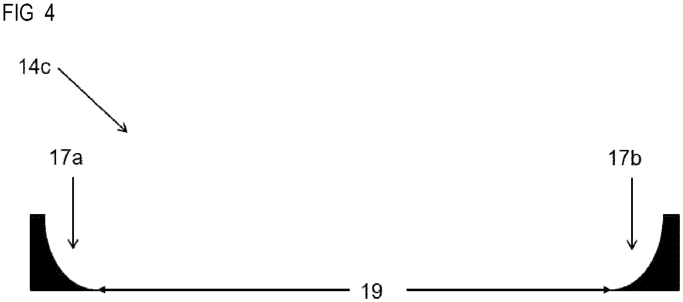

Now turning to FIG 4, a cross-section of the same flow control adaptor 14 is shown. The cross-section of FIG 4 is a cross-section along the plane 15 as illustrated in FIG 3.

Two depressions 17a, 17b and/or cutouts 17a, 17b and/or slots 17a, 17b are placed on either side of the flow control adaptor 14. In the exemplary embodiment shown in FIG 4, the cross-sections of these depressions 17a, 17b and/or cutouts 17a, 17b and/or slots 17a, 17b have arcuate profiles. These arcs connect a surface 16 of the adaptor 14c to another parallel surface of the flow control adaptor 14c, the other surface being opposite the first surface.

It is also envisaged that the profile of these depressions 17a, 17b and/or cutouts 17a, 17b and/or slots 17a, 17b can be triangular. Straight lines of these triangles connect a first surface 16 of the adaptor 14c to a second, parallel surface of the flow control adaptor 14c. The second of these surfaces is disposed opposite the first surface 16 and is parallel to the first surface. It is still envisaged that the profiles of the depressions 17a, 17b and/or cutouts 17a, 17b and/or slots 17a, 17b can comprise steps.

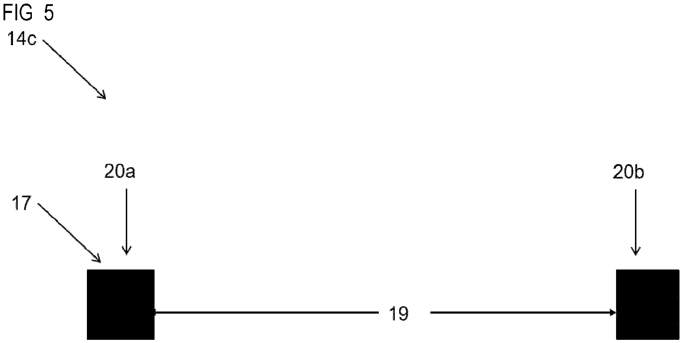

Now referring to FIG 5, another cross-section of the same flow control adaptor 14c is shown. The cross-section of FIG 5 is a different from the cross-section of FIG 4 and is a cross-section along the plane 18 as illustrated in FIG 3.

Two polygonal portions 20a, 20b are placed on either side of the flow control adaptor 14. The portions 20a, 20b with the polygonal profiles are part of a tubular bulk of the flow control adaptor 14c. The portions 20a, 20b are different from the depressions 17a, 17b and/or cutouts 17a, 17b and/or slots 17a, 17b of the flow control adaptor 14c.

In the exemplary embodiment of FIG 5, the portions 20a, 20b have rectangular profiles. It is also envisaged that the portions 20a, 20b can have quadratic profiles.

According to an aspect of the present disclosure, the surface 16 can be structured so as to modify mechanical characteristics of the flow control adaptor 14c. For example, the surface 16 can be structured so as to accommodate stresses and strains inside the flow control adaptor 14c. The surface 16 can also be structured so as to modify flow properties of the flow control adaptor 14c.

A flow control adaptor 14a - 14c can comprise less than two depressions 17a, 17b. More specifically, a flow control adaptor 14a - 14c can comprise a single depression 17a, 17b. Likewise, a flow control adaptor 14a - 14c can comprise less than two cutouts 17a, 17b. More specifically, a flow control adaptor 14a - 14c can comprise a single cutout 17a, 17b. A flow control adaptor 14a - 14c can also comprise less than two slots 17a, 17b. More specifically, a flow control adaptor 14a - 14c can comprise a single slot 17a, 17b.

A flow control adaptor 14a - 14c can comprise more than two depressions 17a, 17b. Likewise, a flow control adaptor 14a - 14c can comprise more than two cutouts 17a, 17b. A flow control adaptor 14a - 14c can also comprise more than two slots 17a, 17b.

The number of depressions 17a - 17d and/or of cutouts 17a - 17d and/or of slots 17a - 17d is generally commensurate with the flow rate to be achieved.

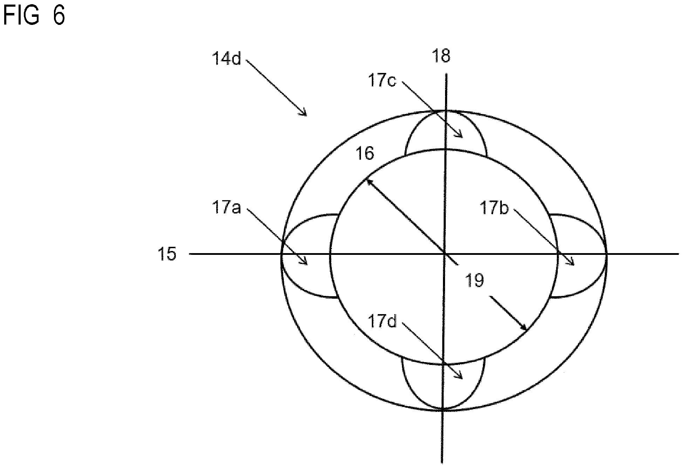

FIG 6 shows a flow control adaptor 14d comprising four depressions 17a - 17d and/or four cutouts 17a - 17d and/or four slots 17a - 17d. The depressions 17a - 17d and/or cutouts 17a - 17d and/or slots 17a - 17d as illustrated in FIG 5 are symmetrically arranged. The arrangement as depicted in FIG 5 has four-fold symmetry. In other words, the flow control adaptor 14d of FIG 5 will have the same appearance after being turned by ninety degrees around an axis. In this case, the symmetry axis is the intersection of planes 15 and 18.

The flow control adaptor 14d of FIG 6 also has reflection symmetry with respect to the planes 15 and 18.

The flow control adaptor 14d provides an aperture and/or an orifice to enable a flow of a fluid toward or from the first port 3. Likewise, the flow control adaptor 14d provides an aperture and/or an orifice to enable a flow of a fluid toward or from the second port 4. The aperture and/or the orifice of the flow control adaptor 14d affords linear movement of the plunger 5 into and out of the aperture and/or the orifice. The aperture and/or the orifice of the adaptor 14d also affords axial movement of the plunger 5 into and out of the aperture and/or the orifice. That is, an inner diameter 19 of the aperture and/or of the orifice of the adaptor 14d is larger than an outer diameter of the plunger 5. More specifically, the inner diameter 19 of the aperture and/or of the orifice can be larger than the outer diameter of the edge of the plunger 5. The inner diameter 19 of the aperture and/or of the orifice can also be larger than the outer diameter of the rim of the plunger 5.

The choices of materials for the flow control adaptor 14d are the same as for the flow control adaptor 14a, 14b and for the flow control adaptor 14c.

Due to its bevelled or inverted frusto-conical surface, the flow control adaptor 14a, 14b of FIG 2 affords a larger flow than the adaptor 14d of FIG 3. The flow control adaptor 14d no longer has a bevelled surface with full rotational symmetry. Instead, depressions 17a, 17b and/or cutouts 17a, 17b and/or slots 17 enable flow. Yet these depressions 17a, 17b and/or cutouts 17a, 17b and/or slots 17 do not afford flow along the entire circumference of the flow control adaptor 14d. Consequently, values of flow through the flow control adaptor 14d tend to be less than values of flow through the flow control adaptor 14a, 14b. The comparison of flow coefficients between these embodiments applies at constant pressure drop and at constant inner diameter of the flow control adaptor 14d.

The flow control adaptor 14d advantageously forms a part that is different from the frame 13 and is different from the gasket 12. The flow control adaptor 14d can even be mechanically separable from the frame 13 and from the gasket 12. The separation preferably takes place non-destructively. That is, various flow control adaptors 14a - 14d can be used together with the same frame 13 and together with the same gasket 12. More specifically, various flow control adaptors 14a - 14d can be mounted to and/or fitted to the same frame 13. For example, various flow control adaptors 14a - 14d can be screw-mounted and/or glued and/or shrink-fitted to the frame 13. When various flow control adaptors 14a - 14d can be mounted to the same frame 13, the valve 1 can be configured more easily. A plethora of flow rates through the valve can be accomplished by replacing the flow control adaptor 14d.

The depressions 17a - 17d as shown in FIG 3 and FIG 6 are symmetrically distributed along a tubular portion of the respective flow control adaptor 14c, 14d. Likewise, the cutouts 17a - 17d of FIG 3 and of FIG 6 are symmetrically distributed along a tubular portion of the respective flow control adaptor 14c, 14d. Also, the slots 17a - 17d of FIG 3 and of FIG 6 are symmetrically distributed along a tubular portion of the respective flow control adaptor 14c, 14d.

Symmetrical arrangements confer advantages in terms of well-defined flow profiles. However, practical cases exist wherein such flow profiles are not desirable. For example, flow measurements involving ultrasonic sensors can require turbulence.

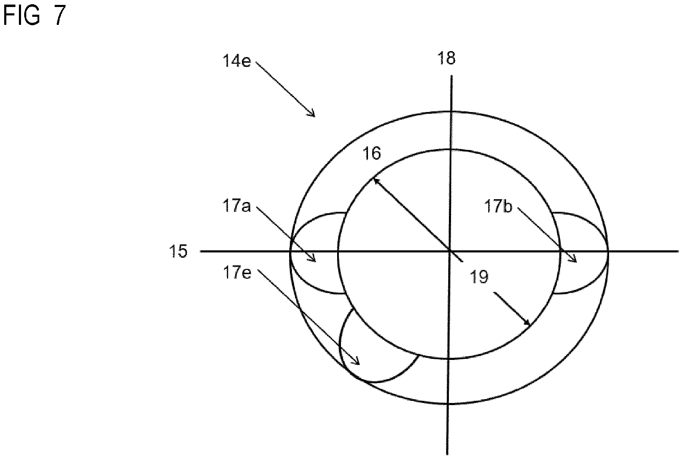

FIG 7 shows a flow adaptor 14e wherein depressions 17a, 17b, and 17e are not symmetrically distributed along the tubular portion of the adaptor 14e. More specifically, the depressions 17a, 17b, and 17e are not symmetrically distributed with respect to an axis defined by an intersection of the planes 15 and 18. The flow adaptor 14e needs to turn by 360 degrees about an axis defined by the intersection of plane 15 and 18 until it looks the same.

FIG 7 also shows a flow adaptor 14e wherein cutouts 17a, 17b, and 17e are not symmetrically distributed along the tubular portion of the adaptor 14e. More specifically, the cutouts 17a, 17b, and 17e are not symmetrically distributed with respect to an axis defined by an intersection of the planes 15 and 18. The flow adaptor 14e needs to turn by 360 degrees about an axis defined by the intersection of plane 15 and 18 until it looks the same.

FIG 7 still shows a flow adaptor 14e wherein slots 17a, 17b, and 17e are not symmetrically distributed along the tubular portion of the adaptor 14e. More specifically, the slots 17a, 17b, and 17e are not symmetrically distributed with respect to an axis defined by an intersection of the planes 15 and 18. The flow adaptor 14e needs to turn by 360 degrees about an axis defined by the intersection of plane 15 and 18 until it looks the same.

The flow control adaptor 14e provides an aperture and/or an orifice to enable a flow of a fluid toward or from the second port 4. The aperture and/or the orifice of the flow control adaptor 14e affords linear movement of the plunger 5 into and out of the aperture and/or the orifice. The aperture and/or the orifice of the adaptor 14e also affords axial movement of the plunger 5 into and out of the aperture and/or the orifice. That is, an inner diameter 19 of the aperture and/or of the orifice of the adaptor 14e is larger than an outer diameter of the plunger 5. More specifically, the inner diameter 19 of the aperture and/or of the orifice can be larger than the outer diameter of the edge of the plunger 5. The inner diameter 19 of the aperture and/or of the orifice can also be larger than the outer diameter of the rim of the plunger 5.

The choices of materials for the flow control adaptor 14e are the same as for the flow control adaptor 14a - 14d.

Due to its bevelled or inverted frusto-conical surface, the flow control adaptor 14a, 14b of FIG 2 affords a larger flow than the adaptor 14e of FIG 3. The flow control adaptor 14e no longer has a bevelled surface with full rotational symmetry. Instead, depressions 17a, 17b and/or cutouts 17a, 17b and/or slots 17 enable flow. Yet these depressions 17a, 17b and/or cutouts 17a, 17b and/or slots 17 do not afford flow along the entire circumference of the flow control adaptor 14e. Consequently, values of flow through the flow control adaptor 14e tend to be less than values of flow through the flow control adaptor 14a, 14b. The comparison of flow coefficients between these embodiments applies at constant pressure drop and at constant inner diameter of the flow control adaptor 14e.

The flow control adaptor 14e advantageously forms a part that is different from the frame 13 and is different from the gasket 12. The flow control adaptor 14e can even be mechanically separable from the frame 13 and from the gasket 12. The separation preferably takes place non-destructively. That is, various flow control adaptors 14a - 14e can be used together with the same frame 13 and together with the same gasket 12. More specifically, various flow control adaptors 14a - 14e can be mounted to and/or fitted to the same frame 13. For example, various flow control adaptors 14a - 14e can be screw-mounted and/or glued and/or shrink-fitted to the frame 13. When various flow control adaptors 14a - 14e can be mounted to the same frame 13, the valve 1 can be configured more easily. A plethora of flow rates through the valve can be accomplished by replacing the flow control adaptor 14e.

As described in detail herein, the instant disclosure deals with a valve (1) comprising:
a first port (3), a second port (4), and a fluid path extending between the first port (3) and the second port (4);
a plunger (5) situated in the fluid path between the first port (3) and the second port (4), the plunger (5) being selectively movable between a closed position which closes the fluid path between the first port (3) and the second port (4) and an open position which opens the fluid path between the first port (3) and the second port (4);
a valve seat assembly (6) situated in the fluid path between the first port (3) and the second port (4), the valve seat assembly (6) comprising:
   a gasket (12), a frame (13), and an adaptor (14a - 14e);
   wherein the gasket (12) is different from the adaptor (14a - 14e) and is interposed between the adaptor (14a - 14e) and a portion of the frame (13);
   wherein the adaptor (14a - 14e) has a first aperture, the first aperture having a first diameter (19) and wherein the gasket (12) has a second aperture, the second aperture having a second diameter;
   wherein in the open position the plunger (5) is detached from the gasket (12) to enable a flow of a fluid through the second aperture and along the fluid path;
   wherein in the closed position the plunger (5) abuts the gasket (12) to prevent the flow of the fluid through the second aperture and along the fluid path; and
   wherein the first diameter (19) is larger than the second diameter.

According to an aspect of the present disclosure, the adaptor (14a - 14e) comprises a flow control adaptor (14a - 14e). According to a special aspect of the present disclosure, the adaptor (14a - 14e) is a flow control adaptor (14a - 14e).

It is envisaged that the gasket (12) is separate from the adaptor (14a - 14e). It is also envisaged that the gasket (12) is separable from the adaptor (14a - 14e). The separation preferably takes place non-destructively. That is, the mechanical structure of the valve is preserved.

The first aperture advantageously comprises a first bore. The first aperture ideally is a first bore. The second aperture advantageously comprises a second bore. The second aperture ideally is a second bore.

In an embodiment, the first diameter (19) is bigger than the second diameter. In a related embodiment, the first diameter (19) is wider than the second diameter. The first diameter (19) can, by way of non-limiting example, be at least 0.5 Millimeters wider than the second diameter. The first diameter (19) can, by way of another non-limiting example, be at least one Millimeter wider than the second diameter. These widths are advantageously widths in a lateral direction. A lateral direction is defined by the (movement of the) plunger (5), the lateral direction being perpendicular to the (linear movement of the) plunger (5). A lateral direction is also defined by the (movement of the) plunger (5), the lateral direction being perpendicular to the (axial movement of the) plunger (5).

The present disclosure also deals with any of the aforementioned valves (1), wherein the adaptor (14a - 14e) comprises a second surface and wherein the portion of the frame (13) comprises a first surface;
wherein the first surface is parallel to the second surface; and
wherein the gasket (12) abuts the first surface and abuts the second surface.

The instant disclosure still deals with any of the aforementioned valves (1), wherein the frame (13) is mechanically mounted to the second port (4);
wherein the adaptor (14a - 14e) is mounted to the frame (13); and
wherein the gasket (12) is squeezed in between the portion of the frame (13) and the adaptor (14a - 14e).

The adaptor (14a - 14e) can, by way of non-limiting example, be removably mounted to the frame (13) by threading the adaptor (14a - 14e) into the frame (13). The adaptor (14a - 14e) can, by way of another non-limiting example, be removably mounted to the frame (13) by gluing the adaptor (14a - 14e) to the frame (13). Removal of the adaptor (14a - 14e) takes place while preserving the mechanical structure and/or integrity of the valve (1).

The present disclosure further deals with any of the aforementioned valves (1), wherein the plunger (5) mechanically connects to a linear actuator (7, 8, 9a, 9b); and
wherein the linear actuator (7, 8, 9a, 9b) is configured to move the plunger (5) along an axial direction.

In an embodiment, the linear actuator (7, 8, 9a, 9b) comprises an armature (7) and at least one solenoid (9a, 9b). The plunger (5) preferably mechanically couples to the armature (7). In a related embodiment, the linear actuator (7, 8, 9a, 9b) comprises an armature (7), a stem (8), and at least one solenoid (9a, 9b), wherein the armature (7) mechanically connects to the stem (8). The plunger (5) preferably mechanically couples to the stem (8). The plunger (5) ideally mechanically connects to the stem (8).

The instant disclosure also deals with any of the aforementioned valves (1) involving first and second surfaces and an actuator, wherein the first surface is perpendicular to the axial direction; and
wherein the second surface is perpendicular to the axial direction.

The present disclosure further deals with any of the aforementioned valves (1), wherein the plunger (5) comprises a head portion having an end, the end pointing toward the valve seat assembly (6);
wherein the head portion protrudes from the plunger (5);
wherein a circular edge is formed by the end of the head portion; and
wherein in the closed position the circular edge abuts the gasket (12).

The instant disclosure further pertains to any of the aforementioned valves (1), wherein the plunger (5) comprises a head portion having an end, the end pointing toward the valve seat assembly (6);
wherein the head portion protrudes from the plunger (5);
wherein a circular rim is formed by the end of the head portion; and
wherein in the closed position the circular rim abuts the gasket (12).

The present disclosure also pertains to any of the aforementioned valves (1), wherein the plunger (5) comprises a body portion and a head portion;
wherein the head portion has an end, the end pointing toward the valve seat assembly (6);
wherein the head portion protrudes from the body portion of plunger (5);
wherein a circular edge is formed by the end of the head portion; and
wherein in the closed position the circular edge abuts the gasket (12). The body portion of the plunger (5) is preferably different from the head portion of the plunger (5). In an embodiment, the body portion of the plunger (5) comprises a receptacle portion of the plunger (5). In a related embodiment, the body portion of the plunger (5) is a receptacle portion of the plunger (5).

The present disclosure also pertains to any of the aforementioned valves (1), wherein the plunger (5) comprises a body portion and a head portion;
wherein the head portion has an end, the end pointing toward the valve seat assembly (6);
wherein the head portion protrudes from the body portion of plunger (5);
wherein a circular rim is formed by the end of the head portion; and
wherein in the closed position the circular rim abuts the gasket (12). The body portion of the plunger (5) is preferably different from the head portion of the plunger (5). In an embodiment, the body portion of the plunger (5) comprises a receptacle portion of the plunger (5). In a related embodiment, the body portion of the plunger (5) is a receptacle portion of the plunger (5).

The instant disclosure also deals with any of the aforementioned valves (1) involving a head portion and an actuator, wherein the head portion axially protrudes from the plunger (5).

The instant disclosure also pertains to any of the aforementioned valves (1) involving a linear actuator (7, 8, 9a, 9b), wherein the plunger (5) comprises a body portion and a head portion; and
wherein the head portion of the plunger (5) axially protrudes from the body portion of the plunger (5).

In an embodiment, the body portion of the plunger (5) comprises a receptacle portion of the plunger (5). In a related embodiment, the body portion of the plunger (5) is a receptacle portion of the plunger (5).

The present disclosure also deals with any of the aforementioned valves (1), wherein the adaptor (14a - 14e) comprises a body portion and an inner surface, the inner surface being disposed between the body portion of the adaptor (14a - 14e) and the first aperture;
wherein the inner surface comprises first and second portions, the second portion of the inner surface being different from the first portion of the inner surface; and
wherein at least one first depression (17a - 17e) is formed in the first portion of the inner surface.

The present disclosure also deals with any of the aforementioned valves (1), wherein the adaptor (14a - 14e) comprises a body portion and an inner surface, the inner surface being disposed between the body portion of the adaptor (14a - 14e) and the first aperture;
wherein the inner surface comprises first and second portions, the second portion of the inner surface being different from the first portion of the inner surface; and
wherein at least one first cutout (17a - 17e) is formed in the first portion of the inner surface.

The present disclosure also deals with any of the aforementioned valves (1), wherein the adaptor (14a - 14e) comprises a body portion and an inner surface, the inner surface being disposed between the body portion of the adaptor (14a - 14e) and the first aperture;
wherein the inner surface comprises first and second portions, the second portion of the inner surface being different from the first portion of the inner surface; and
wherein at least one first pocket (17a - 17e) is formed in the first portion of the inner surface.

The at least one first depression (17a - 17e) is different from the first aperture.

It is envisaged that the inner surface of the adaptor (14a - 14e) comprises an inner cylindrical surface. It is still envisaged that the inner surface of the adaptor (14a - 14e) is an inner cylindrical surface.

The inner surface of the adaptor (14a - 14e) is different from the first surface (16) of the adaptor (14a - 14e). The inner surface of the adaptor (14a - 14e) is different from the second surface of the adaptor (14a - 14e). The latter surface of the adaptor (14a - 14e) abuts the gasket (12).

The present disclosure also deals with any of the aforementioned valves (1), wherein the body portion of the adaptor (14a - 14e) comprises a tubular portion.

The instant disclosure also deals with any of the aforementioned valves (1), wherein the body portion of the adaptor (14a - 14e) is a tubular portion.

The instant disclosure also deals with any of the aforementioned valves (1) involving a body portion of the adaptor (14a - 14e) and a head portion of the plunger (5), wherein in the closed position a first gap is formed between the head portion of the plunger (5) and the at least one first depression (17a - 17e) .

The present disclosure also deals with any of the aforementioned valves (1) involving a body portion of the adaptor (14a - 14e) and a head portion of the plunger (5), wherein in the closed position a first gap is formed between the head portion of the plunger (5) and the at least one first cutout (17a - 17e) .

The present disclosure further deals with any of the aforementioned valves (1) involving a body portion of the adaptor (14a - 14e) and a head portion of the plunger (5), wherein in the closed position a first gap is formed between the head portion of the plunger (5) and the at least one first pocket (17a - 17e).

The first gap preferably is at least 0.05 Millimeters wide. More preferably, the first gap is at least 0.5 Millimeters wide. Wide gaps afford large flow rates when the valve (1) is in the open position. These widths are advantageously widths in a lateral direction. A lateral direction is defined by the (movement of the) plunger (5), the lateral direction being perpendicular to the (linear movement of the) plunger (5). A lateral direction is also defined by the (movement of the) plunger (5), the lateral direction being perpendicular to the (axial movement of the) plunger (5).

The instant disclosure also deals with any of the aforementioned valves (1) involving a body portion of the adaptor (14a - 14e) and a head portion of the plunger (5), wherein in the open position a second gap is formed between the circular edge of the plunger (5) and the at least one first depression (17a - 17e) .

The present disclosure also deals with any of the aforementioned valves (1) involving at least one first cutout (17a - 17e), a body portion of the adaptor (14a - 14e), and a circular edge of the plunger (5), wherein in the open position a second gap is formed between the circular edge of the plunger (5) and the at least one first cutout (17a - 17e).

The present disclosure further deals with any of the aforementioned valves (1) involving at least one first pocket (17a - 17e), a body portion of the adaptor (14a - 14e), and a circular edge of the plunger (5), wherein in the open position a second gap is formed between the circular edge of the plunger (5) and the at least one first pocket (17a - 17e).

The present disclosure also deals with any of the aforementioned valves (1) involving at least one first depression (17a - 17e), a body portion of the adaptor (14a - 14e), and a circular rim of the plunger (5), wherein in the open position a second gap is formed between the circular rim of the plunger (5) and the at least one first depression (17a - 17e).

The instant disclosure further deals with any of the aforementioned valves (1) involving at least one first cutout (17a - 17e), a body portion of the adaptor (14a - 14e), and a circular rim of the plunger (5), wherein in the open position a second gap is formed between the circular rim of the plunger (5) and the at least one first cutout (17a - 17e).

The present disclosure still deals with any of the aforementioned valves (1) involving at least one first pocket (17a - 17e), a body portion of the adaptor (14a - 14e), and a circular rim of the plunger (5), wherein in the open position a second gap is formed between the circular rim of the plunger (5) and the at least one first pocket (17a - 17e).

The second gap preferably is at least 0.05 Millimeters wide. More preferably, the second gap is at least 0.5 Millimeters wide. Wide gaps afford large flow rates when the valve (1) is in the open position. These widths are advantageously widths in a lateral direction. A lateral direction is defined by the (movement of the) plunger (5), the lateral direction being perpendicular to the (linear movement of the) plunger (5). A lateral direction is also defined by the (movement of the) plunger (5), the lateral direction being perpendicular to the (axial movement of the) plunger (5).

The instant disclosure also deals with any of the aforementioned valves (1) involving at least one first depression (17a - 17e), the third portion of the inner surface being different from the first portion of the inner surface and the third portion of the inner surface being different from the second portion of the inner surface;
wherein at least one second depression (17a - 17e) is formed in the third portion of the inner surface; and
wherein the least one first depression (17a - 17e) and the at least one second depression (17a - 17e) are disposed on diametrically opposed sides of the first aperture.

The instant disclosure also deals with any of the aforementioned valves (1) involving at least one first cutout (17a - 17e), wherein the inner surface comprises a third portion, the third portion of the inner surface being different from the first portion of the inner surface and the third portion of the inner surface being different from the second portion of the inner surface;
wherein at least one second cutout (17a - 17e) is formed in the third portion of the inner surface; and
wherein the least one first cutout (17a - 17e) and the at least one second cutout (17a - 17e) are disposed on diametrically opposed sides of the first aperture.

The instant disclosure further deals with any of the aforementioned valves (1) involving at least one first pocket (17a - 17e), wherein the inner surface comprises a third portion, the third portion of the inner surface being different from the first portion of the inner surface and the third portion of the inner surface being different from the second portion of the inner surface;
wherein at least one second pocket (17a - 17e) is formed in the third portion of the inner surface; and
wherein the least one first pocket (17a - 17e) and the at least one second pocket (17a - 17e) are disposed on diametrically opposed sides of the first aperture.

The instant disclosure also deals with any of the aforementioned valves (1) involving at least one first depression (17a - 17e), wherein the inner surface comprises a third portion, the third portion of the inner surface being different from the first portion of the inner surface and the third portion of the inner surface being different from the second portion of the inner surface;
wherein the first portion of the inner surface and the third portion of the inner surface are disposed on diametrically opposed sides of the first aperture; and
wherein at least one second depression (17a - 17e) is formed in a portion of the inner surface that is different from the first and third portions of the inner surface.

According to an aspect of the present disclosure, the at least one second depression (17a - 17e) is formed in the second portion of the inner surface.

The instant disclosure also deals with any of the aforementioned valves (1) involving at least one second depression (17a - 17e) and a head portion, wherein in the closed position a third gap is formed between the head portion of the plunger (5) and the at least one second depression (17a - 17e).

The present disclosure also pertains to any of the aforementioned valves (1) involving a third portion and a head portion, wherein in the closed position a third gap is formed between the head portion of the plunger (5) and the at least one second cutout (17a - 17e).

The present disclosure further pertains to any of the aforementioned valves (1) involving a third portion and a head portion, wherein in the closed position a third gap is formed between the head portion of the plunger (5) and the at least one second pocket (17a - 17e).

The third gap preferably is at least 0.05 Millimeters wide. More preferably, the third gap is at least 0.5 Millimeters wide. Wide gaps afford large flow rates when the valve (1) is in the open position. These widths are advantageously widths in a lateral direction. A lateral direction is defined by the (movement of the) plunger (5), the lateral direction being perpendicular to the (linear movement of the) plunger (5). A lateral direction is also defined by the (movement of the) plunger (5), the lateral direction being perpendicular to the (axial movement of the) plunger (5).

The instant disclosure further pertains to any of the aforementioned valves (1) involving at least one second depression (17a - 17e) and a head portion, wherein in the open position a fourth gap is formed between the circular edge of the plunger (5) and the at least one second depression (17a - 17e).

The fourth gap preferably is at least 0.05 Millimeters wide. More preferably, the fourth gap is at least 0.5 Millimeters wide. Wide gaps afford large flow rates when the valve (1) is in the open position. These widths are advantageously widths in a lateral direction. A lateral direction is defined by the (movement of the) plunger (5), the lateral direction being perpendicular to the (linear movement of the) plunger (5). A lateral direction is also defined by the (movement of the) plunger (5), the lateral direction being perpendicular to the (axial movement of the) plunger (5).

It is stressed that the foregoing relates only to certain embodiments of the disclosure. Numerous changes can be made therein without departing from the scope of the disclosure as defined by the following claims. It should also be understood that the disclosure is not restricted to the illustrated embodiments. Various modifications can be made within the scope of the following claims.

### Reference numerals

1 valve
2 housing
3 port
4 port
5 plunger
6 valve seat assembly
7 armature
8 stem
9a, 9b solenoids
10 chamber
11 resilient member
12 gasket
13 frame
14a - 14e adaptors such as flow control adaptors
15 plane
16 surface such as top surface
17a - 17e depressions and/or cutouts and/or slots
18 plane
19 diameter such as inner diameter
20a, 20b profiles

## Claims

1. A valve (1) comprising:
a first port (3), a second port (4), and a fluid path extending between the first port (3) and the second port (4);
a plunger (5) situated in the fluid path between the first port (3) and the second port (4), the plunger (5) being selectively movable between a closed position which closes the fluid path between the first port (3) and the second port (4) and an open position which opens the fluid path between the first port (3) and the second port (4);
a valve seat assembly (6) situated in the fluid path between the first port (3) and the second port (4), the valve seat assembly (6) comprising:
a gasket (12), a frame (13), and an adaptor (14a - 14e);
wherein the gasket (12) is different from the adaptor (14a - 14e) and is interposed between the adaptor (14a - 14e) and a portion of the frame (13);
wherein the adaptor (14a - 14e) has a first aperture, the first aperture having a first diameter (19) and wherein the gasket (12) has a second aperture, the second aperture having a second diameter;
wherein in the open position the plunger (5) is detached from the gasket (12) to enable a flow of a fluid through the second aperture and along the fluid path;
wherein in the closed position the plunger (5) abuts the gasket (12) to prevent the flow of the fluid through the second aperture and along the fluid path; and
wherein the first diameter (19) is larger than the second diameter.

2. The valve (1) according to claim 1, wherein the adaptor (14a - 14e) comprises a second surface and wherein the portion of the frame (13) comprises a first surface;
wherein the first surface is parallel to the second surface; and
wherein the gasket (12) abuts the first surface and abuts the second surface.

3. The valve (1) according to any of the claims 1 to 2, wherein the frame (13) is mechanically mounted to the second port (4);
wherein the adaptor (14a - 14e) is mounted to the frame (13); and
wherein the gasket (12) is squeezed in between the portion of the frame (13) and the adaptor (14a - 14e).

4. The valve (1) according to any of the claims 1 to 3, wherein the plunger (5) mechanically connects to a linear actuator (7, 8, 9a, 9b); and
wherein the linear actuator (7, 8, 9a, 9b) is configured to move the plunger (5) along an axial direction.

5. The valve (1) according to the claims 2 and 4, wherein the first surface is perpendicular to the axial direction; and
wherein the second surface is perpendicular to the axial direction.

6. The valve (1) according to any of the claims 1 to 5, wherein the plunger (5) comprises a head portion having an end, the end pointing toward the valve seat assembly (6);
wherein the head portion protrudes from the plunger (5);
wherein a circular edge is formed by the end of the head portion; and
wherein in the closed position the circular edge abuts the gasket (12).

7. The valve (1) according to the claims 4 and 6, wherein the head portion axially protrudes from the plunger (5).

8. The valve (1) according to any of the claims 1 to 7, wherein the adaptor (14a - 14e) comprises a body portion and an inner surface, the inner surface being disposed between the body portion of the adaptor (14a - 14e) and the first aperture;
wherein the inner surface comprises first and second portions, the second portion of the inner surface being different from the first portion of the inner surface; and
wherein at least one first depression (17a - 17e) is formed in the first portion of the inner surface.

9. The valve (1) according to claim 8, wherein the body portion of the adaptor (14a - 14e) comprises a tubular portion.

10. The valve (1) according to the claim 6 and according to any of the claims 8 to 9, wherein in the closed position a first gap is formed between the head portion of the plunger (5) and the at least one first depression (17a - 17e).

11. The valve (1) according to the claim 6 and according to any of the claims 8 to 10, wherein in the open position a second gap is formed between the circular edge of the plunger (5) and the at least one first depression (17a - 17e).

12. The valve (1) according to any of the claims 8 to 11, wherein the inner surface comprises a third portion, the third portion of the inner surface being different from the first portion of the inner surface and the third portion of the inner surface being different from the second portion of the inner surface;
wherein at least one second depression (17a - 17e) is formed in the third portion of the inner surface; and
wherein the least one first depression (17a - 17e) and the at least one second depression (17a - 17e) are disposed on diametrically opposed sides of the first aperture.

13. The valve (1) according to any of the claims 8 to 11, wherein the inner surface comprises a third portion, the third portion of the inner surface being different from the first portion of the inner surface and the third portion of the inner surface being different from the second portion of the inner surface;
wherein the first portion of the inner surface and the third portion of the inner surface are disposed on diametrically opposed sides of the first aperture; and
wherein at least one second depression (17a - 17e) is formed in a portion of the inner surface that is different from the first and third portions of the inner surface.

14. The valve (1) according to the claim 6 and according to any of the claims 12 to 13, wherein in the closed position a third gap is formed between the head portion of the plunger (5) and the at least one second depression (17a - 17e).

15. The valve (1) according to the claim 6 and according to any of the claims 12 to 14, wherein in the open position a fourth gap is formed between the circular edge of the plunger (5) and the at least one second depression (17a - 17e).

## Amended claims

### Amended claims in accordance with Rule 137(2) EPC.

**1.** A valve (1) comprising:
a first port (3), a second port (4), and a fluid path extending between the first port (3) and the second port (4);
a plunger (5) situated in the fluid path between the first port (3) and the second port (4), the plunger (5) being selectively movable between a closed position which closes the fluid path between the first port (3) and the second port (4) and an open position which opens the fluid path between the first port (3) and the second port (4);
a valve seat assembly (6) situated in the fluid path between the first port (3) and the second port (4), the valve seat assembly (6) comprising:
a gasket (12), a frame (13), and an adaptor (14a - 14e);
wherein the gasket (12) is different from the adaptor (14a - 14e) and is interposed between the adaptor (14a - 14e) and a portion of the frame (13);
wherein the adaptor (14a - 14e) has a first aperture, the first aperture having a first diameter (19) and wherein the gasket (12) has a second aperture, the second aperture having a second diameter;
wherein in the open position the plunger (5) is detached from the gasket (12) to enable a flow of a fluid through the second aperture and along the fluid path;
wherein in the closed position the plunger (5) abuts the gasket (12) to prevent the flow of the fluid through the second aperture and along the fluid path;
wherein the first diameter (19) is larger than the second diameter;
**characterised in that**
the adaptor (14a - 14e) comprises a body portion and an inner surface, the inner surface being disposed between the body portion of the adaptor (14a - 14e) and the first aperture; and **in that**
the inner surface comprises first and second portions, the second portion of the inner surface being different from the first portion of the inner surface; and **in that**
at least one first depression (17a - 17e) is formed in the first portion of the inner surface.

**2.** The valve (1) according to claim 1, wherein the adaptor (14a - 14e) comprises a second surface and wherein the portion of the frame (13) comprises a first surface;
wherein the first surface is parallel to the second surface; and
wherein the gasket (12) abuts the first surface and abuts the second surface.

**3.** The valve (1) according to any of the claims 1 to 2, wherein the frame (13) is mechanically mounted to the second port (4);
wherein the adaptor (14a - 14e) is mounted to the frame (13); and
wherein the gasket (12) is squeezed in between the portion of the frame (13) and the adaptor (14a - 14e).

**4.** The valve (1) according to any of the claims 1 to 3, wherein the plunger (5) mechanically connects to a linear actuator (7, 8, 9a, 9b); and
wherein the linear actuator (7, 8, 9a, 9b) is configured to move the plunger (5) along an axial direction.

**5.** The valve (1) according to the claims 2 and 4, wherein the first surface is perpendicular to the axial direction; and
wherein the second surface is perpendicular to the axial direction.

**6.** The valve (1) according to any of the claims 1 to 5, wherein the plunger (5) comprises a head portion having an end, the end pointing toward the valve seat assembly (6);
wherein the head portion protrudes from the plunger (5);
wherein a circular edge is formed by the end of the head portion; and
wherein in the closed position the circular edge abuts the gasket (12).

**7.** The valve (1) according to the claims 4 and 6, wherein the head portion axially protrudes from the plunger (5).

**8.** The valve (1) according to claim 7, wherein the body portion of the adaptor (14a - 14e) comprises a tubular portion.

**9.** The valve (1) according to claim 6, wherein in the closed position a first gap is formed between the head portion of the plunger (5) and the at least one first depression (17a - 17e).

**10.** The valve (1) according to claim 6, wherein in the open position a second gap is formed between the circular edge of the plunger (5) and the at least one first depression (17a - 17e).

**11.** The valve (1) according to any of the claims 1 to 10, wherein the inner surface comprises a third portion, the third portion of the inner surface being different from the first portion of the inner surface and the third portion of the inner surface being different from the second portion of the inner surface;
wherein at least one second depression (17a - 17e) is formed in the third portion of the inner surface; and
wherein the least one first depression (17a - 17e) and the at least one second depression (17a - 17e) are disposed on diametrically opposed sides of the first aperture.

**12.** The valve (1) according to any of the claims 1 to 10, wherein the inner surface comprises a third portion, the third portion of the inner surface being different from the first portion of the inner surface and the third portion of the inner surface being different from the second portion of the inner surface;
wherein the first portion of the inner surface and the third portion of the inner surface are disposed on diametrically opposed sides of the first aperture; and
wherein at least one second depression (17a - 17e) is formed in a portion of the inner surface that is different from the first and third portions of the inner surface.

**13.** The valve (1) according to the claim 6 and according to any of the claims 11 to 12, wherein in the closed position a third gap is formed between the head portion of the plunger (5) and the at least one second depression (17a - 17e).

**14.** The valve (1) according to the claim 6 and according to any of the claims 11 to 13, wherein in the open position a fourth gap is formed between the circular edge of the plunger (5) and the at least one second depression (17a - 17e).

**1.** A valve (1) comprising:
a first port (3), a second port (4), and a fluid path extending between the first port (3) and the second port (4);
a plunger (5) situated in the fluid path between the first port (3) and the second port (4), the plunger (5) being selectively movable between a closed position which closes the fluid path between the first port (3) and the second port (4) and an open position which opens the fluid path between the first port (3) and the second port (4);
a valve seat assembly (6) situated in the fluid path between the first port (3) and the second port (4), the valve seat assembly (6) comprising:
a gasket (12), a frame (13), and an adaptor (14a - 14e);
wherein the gasket (12) is interposed between the adaptor (14a - 14e) and a portion of the frame (13);
wherein the adaptor (14a - 14e) has a first aperture, the first aperture having a first diameter (19) and wherein the gasket (12) has a second aperture, the second aperture having a second diameter;
wherein in the open position the plunger (5) is detached from the gasket (12) to enable a flow of a fluid through the second aperture and along the fluid path;
wherein in the closed position the plunger (5) abuts the gasket (12) to prevent the flow of the fluid through the second aperture and along the fluid path;
wherein the first diameter (19) is larger than the second diameter;
**characterised in that**
the adaptor (14a - 14e) comprises a body portion and an inner surface, the inner surface being disposed between the body portion of the adaptor (14a - 14e) and the first aperture; and **in that**
the inner surface comprises first and second portions, the second portion of the inner surface being different from the first portion of the inner surface; and **in that**
at least one first depression (17a - 17e) is formed in the first portion of the inner surface; and **in that**
the gasket (12) is separate from the adaptor (14a - 14e).

**2.** The valve (1) according to claim 1, wherein the adaptor (14a - 14e) comprises a second surface and wherein the portion of the frame (13) comprises a first surface;
wherein the first surface is parallel to the second surface; and
wherein the gasket (12) abuts the first surface and abuts the second surface.

**3.** The valve (1) according to any of the claims 1 to 2, wherein the frame (13) is mechanically mounted to the second port (4);
wherein the adaptor (14a - 14e) is mounted to the frame (13); and
wherein the gasket (12) is squeezed in between the portion of the frame (13) and the adaptor (14a - 14e).

**4.** The valve (1) according to any of the claims 1 to 3, wherein the plunger (5) mechanically connects to a linear actuator (7, 8, 9a, 9b); and
wherein the linear actuator (7, 8, 9a, 9b) is configured to move the plunger (5) along an axial direction.

**5.** The valve (1) according to the claims 2 and 4, wherein the first surface is perpendicular to the axial direction; and
wherein the second surface is perpendicular to the axial direction.

**6.** The valve (1) according to any of the claims 1 to 5, wherein the plunger (5) comprises a head portion having an end, the end pointing toward the valve seat assembly (6);
wherein the head portion protrudes from the plunger (5);
wherein a circular edge is formed by the end of the head portion; and
wherein in the closed position the circular edge abuts the gasket (12).

**7.** The valve (1) according to the claims 4 and 6, wherein the head portion axially protrudes from the plunger (5).

**8.** The valve (1) according to claim 7, wherein the body portion of the adaptor (14a - 14e) comprises a tubular portion.

**9.** The valve (1) according to claim 6, wherein in the closed position a first gap is formed between the head portion of the plunger (5) and the at least one first depression (17a - 17e).

**10.** The valve (1) according to claim 6, wherein in the open position a second gap is formed between the circular edge of the plunger (5) and the at least one first depression (17a - 17e).

**11.** The valve (1) according to any of the claims 1 to 10, wherein the inner surface comprises a third portion, the third portion of the inner surface being different from the first portion of the inner surface and the third portion of the inner surface being different from the second portion of the inner surface;
wherein at least one second depression (17a - 17e) is formed in the third portion of the inner surface; and
wherein the least one first depression (17a - 17e) and the at least one second depression (17a - 17e) are disposed on diametrically opposed sides of the first aperture.

**12.** The valve (1) according to any of the claims 1 to 10, wherein the inner surface comprises a third portion, the third portion of the inner surface being different from the first portion of the inner surface and the third portion of the inner surface being different from the second portion of the inner surface;
wherein the first portion of the inner surface and the third portion of the inner surface are disposed on diametrically opposed sides of the first aperture; and
wherein at least one second depression (17a - 17e) is formed in a portion of the inner surface that is different from the first and third portions of the inner surface.

**13.** The valve (1) according to the claim 6 and according to any of the claims 11 to 12, wherein in the closed position a third gap is formed between the head portion of the plunger (5) and the at least one second depression (17a - 17e).

**14.** The valve (1) according to the claim 6 and according to any of the claims 11 to 13, wherein in the open position a fourth gap is formed between the circular edge of the plunger (5) and the at least one second depression (17a - 17e).
